(19) **Europäisches Patentamt / European Patent Office / Office européen des brevets**

(11) **EP 1 052 029 B1**

(12) **FASCICULE DE BREVET EUROPEEN**

(45) Date de publication et mention
de la délivrance du brevet:
**02.05.2007 Bulletin 2007/18**

(51) Int Cl.:
**B06B 1/14** *(2006.01)*   **E02D 3/068** *(2006.01)*
**F16F 7/10** *(2006.01)*

(21) Numéro de dépôt: **00400996.5**

(22) Date de dépôt: **11.04.2000**

(54) **Dispositif résonant, tel que batteur ou générateur d'efforts**

Resonanzvorrichtung wie Schläger oder Krafterzeuger

Resonant device, such as beater or force generator

(84) Etats contractants désignés:
**AT BE CH CY DE DK ES FI FR GB GR IE IT LI LU MC NL PT SE**

(30) Priorité: **22.04.1999 FR 9905110**

(43) Date de publication de la demande:
**15.11.2000 Bulletin 2000/46**

(73) Titulaire: **HUTCHINSON**
**75008 Paris (FR)**

(72) Inventeur: **Noe, Mathieu**
**77630 Barbizon (FR)**

(74) Mandataire: **Jacquard, Philippe Jean-Luc et al**
**Cabinet ORES**
**36, rue de St Pétersbourg**
**75008 Paris (FR)**

(56) Documents cités:
**EP-A- 0 676 559        DE-A- 2 302 098**

• **PATENT ABSTRACTS OF JAPAN vol. 013, no. 365 (M-859), 15 août 1989 (1989-08-15) & JP 01 120453 A (MITSUBISHI ELECTRIC CORP), 12 mai 1989 (1989-05-12)**

## Description

La présente invention a pour objet un dispositif résonant comprenant un système masse-ressort associant une masse principale et un ressort, utilisable comme batteur passif ou actif accordé de manière à étouffer une vibration, ou bien encore comme générateur d'efforts dynamiques pour appliquer des efforts à une structure.

L'accord est obtenu en choisissant la masse et la raideur du ressort pour que par exemple la fréquence propre de l'ensemble masse-ressort soit égale à celle de la vibration à générer ou à étouffer.

Une adaptation entre le dispositif et la ou les vibrations à étouffer pose un certain nombre de problèmes. Un de ces problèmes est que, pour les dispositifs connus, la fréquence d'accord est fixe, et que le dispositif ne peut donc être utilisé que pour un fonctionnement à une fréquence donnée.

Il est connu de la Demande de Brevet JP-01120453 de faire varier la valeur de la masse principale en attirant magnétiquement des masses additionnelles. Il est connu de la Demande de Brevet EP 676 559 de faire varier la valeur de la masse principale en faisant varier la quantité de fluide dans une cavité. Ces dispositifs ne conviennent pas à un dispositif tel qu'un batteur qui est soumis à des vibrations dont le niveau peut être élevé.

La présente invention vise à permettre un réglage de fréquence d'un dispositif résonnant tel qu'un batteur actif ou passif.

Dans ce but, l'invention concerne un dispositif résonant passif ou actif tel que défini dans la revendication 1.

Le dispositif peut être caractérisé en ce qu'il comporte au moins un ensemble électromagnétique comprenant deux dispositifs complémentaires dont le premier présente au moins une pièce électromagnétique et dont le deuxième présente au moins un électro-aimant, l'un des deux dispositifs complémentaires étant couplé à la masse principale, et l'autre dispositif complémentaire étant couplé à une masse additionnelle, les deux dispositifs étant disposés en vis-à-vis l'un à l'autre, de manière telle que, lorsqu'un des électro-aimants est activé, deux dispositifs complémentaires sont mécaniquement solidaires, de sorte que la masse principale et ladite masse additionnelle sont couplées.

Au moins une pièce électromagnétique peut être couplée par exemple élastiquement à la masse principale, au moins un électro-aimant étant alors couplé à ladite masse additionnelle. Ledit couplage élastique, qui est par exemple réalisé à l'aide d'une lame flexible, peut présenter un degré de liberté élastique dans une direction sensiblement perpendiculaire à une direction principale des oscillations de la masse principale, par exemple la direction de génération d'efforts.

Le dispositif peut être caractérisé en ce qu'un premier dispositif complémentaire comporte deux pièces électromagnétiques espacées l'un de l'autre et solidaires de ladite lame flexible, et en ce qu'un deuxième dispositif complémentaire comporte deux électro-aimants disposés en vis-à-vis des deux pièces électromagnétiques. Les deux électro-aimants peuvent être solidaires d'au moins une pièce de liaison.

D'autres caractéristiques et avantages de l'invention apparaîtront mieux à la lecture de la description qui va suivre, donnée à titre d'exemple non limitatif, en liaison avec les dessins annexés, dans lesquels :

- la figure 1 représente un dispositif comprenant un système masse-ressort utilisable dans le cadre de la présente invention ;
- la figure 2 représente un mode de réalisation préféré relatif au premier aspect de l'invention, et qui est également utilisable dans le cadre du deuxième aspect de l'invention ;
- la figure 3 est une vue latérale du dispositif selon la figure 2 ;
- la figure 4 représente un mode de réalisation préféré d'un module de masse additionnelle ;
- la figure 5 représente un dispositif à masse ferromagnétique, utilisable pour coupler une masse additionnelle ;
- la figure 6 illustre un dispositif selon le deuxième aspect de l'invention, dont les courbes de réponses sont représentées à la figure 7.

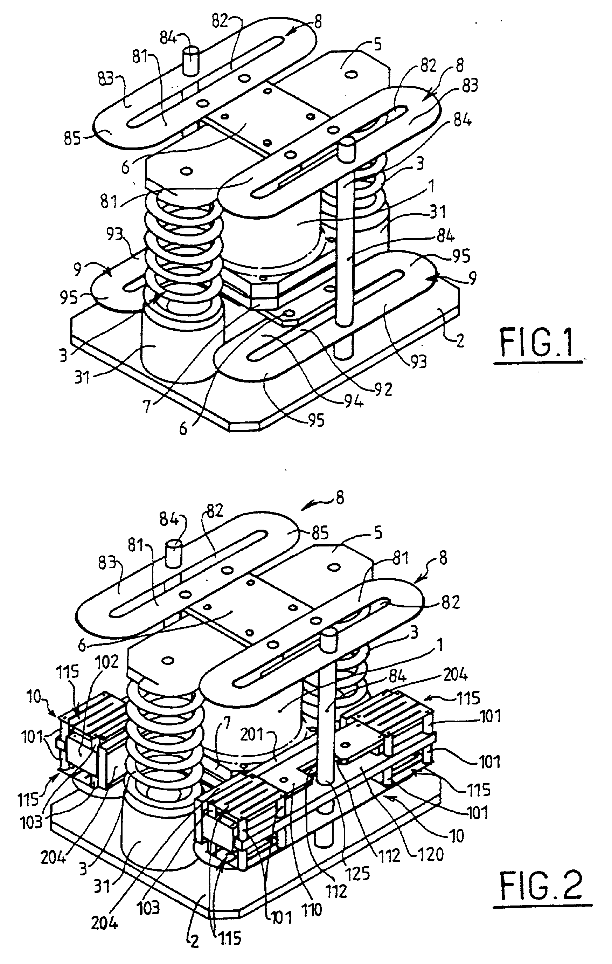

Le dispositif représenté à la figure 1 comporte un élément massique 1 de masse m3 qui, dans le cas d'un batteur actif, intègre un générateur électrodynamique ou à réluctance variable. Une plaque 5 fixée à l'élément 1 porte à ses extrémités deux ressorts 3 qui confèrent au système masse-ressort ainsi constitué une raideur K3. Ces deux ressorts 3 reposent sur des plots cylindriques 31 portés par une platine 2 qui est couplée à une structure dont on veut étouffer les vibrations ou à laquelle on veut communiquer des vibrations.

A la partie supérieure, la plaque 5 porte une plaquette 6 aux extrémités de laquelle sont fixées les branches 81 de deux ressorts 8 qui présentent deux branches opposées 81 et 83 séparées par une fente 82 et reliées entre elles par les secteurs 85. A la partie inférieure, l'élément 1 présente une platine 7 à la partie inférieure de laquelle est montée une plaque 6 aux extrémités de laquelle sont fixées les branches 91 de deux ressorts 9 semblables aux ressorts 58 et qui présentent deux branches opposées 91 et 93 séparées par une fente 92 et reliées par des secteurs 95. Les branches 83 et 93 des ressorts 8 et 9 sont solidaires de montants 84 perpendiculaires au plan de la platine 2 et qui sont solidaires de celle-ci. Les plaques 6 étant solidaires de la plaque 5 et de la platine 7, les ressorts 8 et 9 permettent de centrer l'ensemble masse 1-ressort 3 lors de ses débattements perpendiculairement au plan de la platine 2.

Les montants 84 peuvent être utilisés pour disposer des masses additionnelles qui peuvent être couplées à la masse principale 1 ou bien découplées de celle-ci, afin de faire varier la masse dynamique du batteur, et donc de modifier les conditions de résonance.

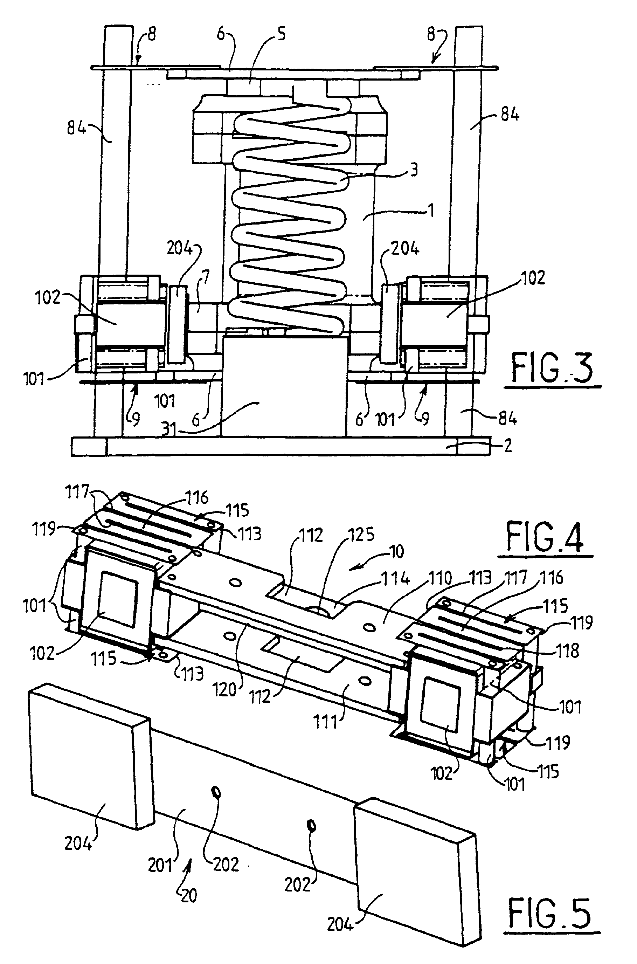

Comme le montre la figure 4, un module 10 de masse additionnelle pour ajouter une masse m4 à la masse principale m3 comporte deux électro-aimants 102 montés aux deux extrémités du bras de liaison 110 et 111, échancrés en 112 en vue du passage d'un montant 84. Des ressorts 115 présentant des bras 116, forment un parcours en zigzag, qui sont séparés par des fentes 117 s'étendant à partir de bords opposés 113 et 119. Ces ressorts 115 servent à suspendre et à guider la masse m4 qui est constituée par les deux électro-aimants 102 et les pièces de liaison 110 et 111.

Chaque ressort 115 est monté sur deux paires de tirants 101 et 103. Les tirants 101 sont solidaires d'une plaque fixe 120 solidaire par son ouverture 125 du montant 84. Les tirants 103, montés à l'opposé des tirants 101, sont solidaires de l'électro-aimant correspondant 102. Pour chaque électro-aimant, il y a deux paires supérieure et inférieure de tirants 101, et deux paires, supérieure et inférieure de tirants 103. On obtient de la sorte un degré de liberté parallèlement à la direction de déplacement de l'élément 1, c'est-à-dire perpendiculairement au plan de la platine 2.

La figure 5 montre le dispositif 20 qui permet de coupler la masse additionnelle m4 (réf. 10) à la masse principale 3. Il comporte deux masses ferromagnétiques 204 par exemple lamifiées montées à l'extrémité d'une lame de flexion 201 fixée au niveau de ses ouvertures 202 sur une face latérale de la platine 7. Cette lame de flexion présente une forte raideur dans la direction de déplacement de la masse 1 du batteur, c'est-à-dire, de la vibration à générer ou a atténuer, mais une raideur bien plus faible dans le plan perpendiculaire à ladite direction de déplacement.

Comme le montre la figure 2, les masses ferromagnétiques 204 sont situées en face des électro-aimants 102. De la sorte, les circuits magnétiques des électro-aimants 102 se referment sur les masses magnétiques 204.

Le couplage s'effectue de la manière suivante: l'activation des électro-aimants 102 provoque l'application des masses 204 sur la surface des électro-aimants 102, et donc un couplage mécanique de la masse additionnelle. Etant donné que la platine 7 est solidaire en déplacement de la masse principale, la masse additionnelle est également entraînée dans un mouvement parallèle à l'axe des montants 84, qui est rendu possible par l'effet de suspension procuré par les ressorts lamellaires 115.

Lorsque les électro-aimants 102 sont désactivés, les masses 204 s'écartent des électro-aimants 102, et la masse additionnelle est découplée de la masse principale.

Le mode de réalisation des figures 2 à 5 permet de réaliser une variation de la masse du batteur par couplage d'une ou plusieurs masses additionnelles de valeurs précises, ce qui permet de changer la fréquence du batteur afin de traiter des vibrations dont la fréquence peut changer.

Dans l'exemple représenté, on excite simultanément les quatre électro-aimants pour coupler les deux modules 10 de l'élément principal 1.

On peut ajouter ainsi le nombre de masses que l'on veut et donner au batteur autant de nouvelles fréquences d'accord.

La fixation des masses additionnelles permet :

- d'une part, quant elles ne sont pas couplées à la masse principale, qu'elle demeurent en face de la lame de flexion liée à la masse du batteur et cela sur toute la course de celui-ci,
- d'autre part, qu'elles suivent le mouvement de la masse principale en mode connecté.

Ce résultat est obtenu grâce aux ressorts à lames 115 qui sont suffisamment raides dans le plan perpendiculaire à la direction du mouvement du batteur pour éviter leur mouvement dans ce plan et suffisamment souples dans la direction du mouvement du batteur pour l'accompagner dans ses déplacements, la souplesse étant fixée de façon à réaliser avec la nouvelle masse et les caractéristiques antécédentes du batteur le nouvel accord de celui-ci. La raideur de ces lames peut être complétée par celles de ressorts agissant en parallèle avec elles pour réaliser le nouvel accord, (ce qui revient, en quelques sortes, à connecter au batteur initial un nouveau batteur placé en parallèle).

Le dispositif décrit permet de générer des efforts dynamiques importants en basse fréquence selon une consigne fournie à un boîtier électronique.

L'effort est généré de manière inertielle, c'est-à-dire en utilisant les principe d'action-réaction s'appliquant à une masse excitée en effort. La masse est constituée par la masse du corps du générateur.

L'invention peut être mise en oeuvre à l'aide d'un générateur à réluctance variable incorporé à la masse principale 1 et de sa commande via un calculateur numérique dont l'algorithme en linéarise de manière connue en soi la caractéristique force-déplacement, à la fois comme générateur d'effort et de masse dans un système masse-ressort en vue d'introduire des efforts importants en basse fréquence dans une structure.

Lorsqu'on cherche à générer un effort sur une structure S quelconque sans s'appuyer sur une autre structure, le principe de base consiste à s'appuyer sur une masse de réaction m2. L'effort magnétique U crée entre la structure et la masse m2 engendre un effort Ft dans la structure S. Cet effort est relié à U par la relation Ft = H.U où H est une fonction de transfert donnée par les caractéristiques du montage du générateur :

$$H(p) = m2p^2/(m2p^2 + K2)$$

P est la variable de Laplace
K2 désignant la raideur de la liaison élastique entre la masse m2 et la structure S.

D'une façon générale la masse m2 est constituée par la masse mobile d'un générateur électromagnétique (à réluctance variable) ou d'un générateur électrodynamique.

La masse m2 et la liaison élastique de rigidité K2 constitue un système mécanique oscillant dont on peut exploiter l'amplification à la résonance dans la limite des débattements admissibles.

Cette technique est couramment utilisée avec des générateurs électrodynamiques (bobines plongeant dans un champ constant).

Néanmoins, cette technique qui utilise des générateurs électrodynamiques est difficile à mettre en oeuvre lorsqu'on cherche des niveaux d'efforts transmis Ft élevés (typiquement supérieurs à 1kN), car elle conduirait à une masse et un encombrement prohibitifs des aimants permanents créateurs du champ magnétique.

L'utilisation directe des générateurs à réluctance variable qui fournissent des efforts importants dans un volume puis réduit n'est guère possible en basse fréquence, car leur course est limitée par la nécessité d'avoir des entrefers faibles pour générer de l'effort.

La solution est obtenue en venant exciter un système oscillant masse-ressort à une fréquence proche de sa fréquence propre. On bénéficie alors du coefficient d'amplification d'un tel système, sans avoir besoin de générer un effort initial important.

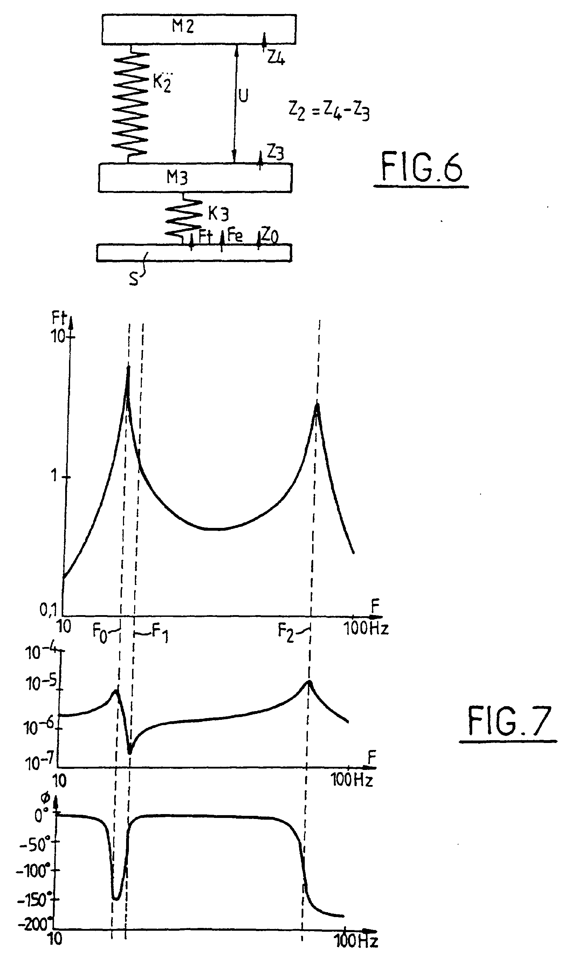

Le schéma de montage (voir figure 6) met en oeuvre un générateur ayant une masse m2 suspendue avec une raideur K2, qui excite la masse m3 du système masse-ressort auxiliaire, ayant une masse auxiliaire m3 et présentant une raideur K3.

La masse m2 est constituée par la masse principale 1 qui est couplée à un générateur dont elle constitue la masse mobile. La raideur K2 est définie par les ressorts 3.

En désignant par $Z_2$ l'amplitude du mouvement de la masse m2 par rapport à la masse m3, on a :

$$Z_2/U = [(m2 + m3)p^2 + K3)] / [m2.m3.p^4 + (K2.m2 + m2.K3 + K2.m3)p^2 + K2.K3]$$

$$Ft/U = -K3.m2.p^2 / [m2.m3.p^4 + (K2.m2 + m2.K3 + K2.m3)p^2 + k2.K3],$$

ce qui permet de déterminer les trois fréquences propres fo, f1 et f2, qui sont reliées aux paramètres masse et raideur par la formule suivante :

$$fo = \tfrac{1}{4}\,\pi\,(m2.K2 + K2.m3 + K2.\,m2 - \sqrt{\Delta}$$

$$f_1 = \tfrac{1}{2}\,\pi\,\sqrt{K3/(m2 + m3)}$$

$$f_2 = \tfrac{1}{4}\,\pi\,(m2.K3 + K2.m3 + K2.\,m2 + \sqrt{\Delta}$$

$$\Delta = (m2^2.K3^2 - 2m2.m3.K2.K3 + 2m2^2.K3.K2 + K2^2.m3^2 + 2K2^2.m3\,.m2 + K2^2.m2^2) / (m2.m3)\,.$$

Ces formules se traduisent par les représentations graphiques données à la figure 7, avec les valeurs suivantes :

$$K3 = 2,2 \ 10^5 \ N/m$$

$$m3 = 4 \ kg$$

$$K2 = 1,518 \ 10^6 \ N/m$$

$$m3 = 13,7 \ kg.$$

La courbe du haut présente le module de la fonction de transfert Ft/U, la courbe du milieu présente le module de la fonction de transfert $Z_2$/U, la courbe du bas représente la phase de la fonction de transfert $Z_2$/U.

Le dispositif présente deux fréquences de résonance $f_0$ et $f_2$ pour lesquelles il existe une grande amplification de l'effort généré, et une fréquence d'antirésonance f1 correspondant au mode propre des masses m2 + m3 sur le ressort K3.

Comme on veut générer des efforts en basse fréquence, on peut régler les masses et les raideurs de façon à ce que la fréquence de résonance $f_0$ ou $f_1$ soit celle d'utilisation.

Si on pilote le générateur d'effort à la fréquence $f_0$, on voit que l'amplitude $z_2$ peut devenir très grande et conduire à la saturation, voire la destruction de l'actionneur. Par contre, on remarque que cette amplitude devient très faible autour de l'antirésonance $f_1$. Dans le cas d'un générateur à réluctance variable, cette amplitude $z_2$ est la variation de l'entrefer, ce qui fait qu'on peut donc utiliser un entrefer faible et avoir par conséquent un effort généré important.

Si on pilote à la fréquence $f_1$, le fait d'avoir un déplacement $z_2$ faible conduit à utiliser l'actionneur à réluctance variable pour la raison vue ci-dessus. Il est alors quasiment impossible de faire saturer mécaniquement l'actionneur car $z_2$ reste très faible quelque soit U. La limitation d'usage n'est plus due à une résonance toujours difficile à contrôler, mais à l'intensité maximale admissible par le générateur.

A cette fréquence, le rapport Ft/U est toujours supérieur à 1, ce qui fait que l'on profite encore de l'amplification mécanique.

C'est donc à la fréquence $f_1$ que l'on doit arriver à générer l'effort Ft transmis à la structure le plus important. Sa valeur dépend essentiellement de l'intensité maximale du courant que l'on veut faire circuler dans les bobinages du générateur à réluctance variable.

Pour garantir que les 3 fréquences $f_0$, $f_1$, $f_2$ , respectent la relation $f_2 > f_1 > f_0$, il faut choisir les masses et raideurs telles que :

$f_1$ est donné comme étant la fréquence du maximum de Ft recherché

$f_2 = k.f_1$ avec k > 1, idéalement 2 < k < 4

m2 étant donné, $k2 \approx m2 \ (2 \ \pi.f_2)^2$ (cette valeur a été calculée en mode découplé, ce qui donne en première approximation un résultat surestimé que l'on peut corriger manuellement par la suite).

On a alors $K3 = (m2 + m3) \ (2 \ \pi.f_2)^2$, m3 étant une masse liée à la construction mécanique (carcasse de l'actionneur, ½ masse de K3 et K2 ...). Pour un effort Ft maximal à masse totale donnée, on a intérêt à maximiser m2 par rapport à (m2 + m3).

En respectant ces relations, on aura naturellement $f_0 < f_1$.

Le générateur est préférablement du type à réluctance variable avec une masse mobile auxiliaire de valeur m2, la masse principale étant ajustée à la valeur m3.

Des ressorts à lame ayant une souplesse élevée dans le sens des vibrations recherchées, et raides dans les autres directions permettent de guider la masse m2. On peut à cet effet utiliser un montage du même type que pour la masse additionnelle m4.

On remarque cependant qu'un autre type de guidage pourrait être utilisé car l'amortissement éventuel qu'il pourrait introduite serait moins gênant que pour un système travaillant à la résonance de fréquence $f_0$, étant donné qu'à la fréquence d'anti-résonance $f_1$, le coefficient d'amplification est peu modifié par un amortissement éventuel, alors qu'il l'est beaucoup à la résonance.

**Revendications**

1. Dispositif résonant comportant un système masse-ressort composé d'une masse principale comprenant au moins un élément massique principal, et d'au moins un élément de ressort et comportant au moins une masse additionnelle (10) et un dispositif de couplage (204) apte à coupler la masse additionnelle (10) à la masse principale (1) et à l'en découpler, afin de modifier la fréquence d'accord du dispositif, **caractérisé en ce que** la masse additionnelle comporte un élément massique additionnel (102) maintenu en position par un dispositif élastique (115) qui présente un degré de liberté élastique dans une direction sensiblement parallèle à une direction principale des oscillations de la masse principale (1).

2. Dispositif résonant selon la revendication 1, **caractérisé en ce que** le dispositif de couplage comporte au moins un ensemble électromagnétique comprenant deux dispositifs complémentaires dont le premier présente au moins une pièce électromagnétique (204) et dont le deuxième présente au moins un électro-aimant (102), l'un des deux dispositifs complémentaires étant couplé à la masse principale (1), et l'autre dispositif complémentaire étant couplé à une dite masse additionnelle (10), les deux dispositifs étant disposés en vis-à-vis l'un à l'autre, de manière telle que, lorsqu'un dit électro-aimant (102) est activé, deux dits dispositifs complémentaires (102, 204) sont mécaniquement solidaires, de sorte que la masse principale (1) et ladite masse additionnelle (10) sont couplées.

3. Dispositif résonant selon la revendication 2, **caractérisé en ce qu'**au moins une pièce électromagnétique (204) est couplée à la masse principale (1) et **en ce qu'**au moins un électro-aimant (102) est couplé à ladite masse additionnelle (10).

4. Dispositif résonant selon la revendication 3, **caractérisé en ce que** le couplage entre ladite pièce électromagnétique (204) et la masse principale (1) est élastique.

5. Dispositif résonant selon la revendication 4, **caractérisé en ce que** ledit couplage présente un degré de liberté élastique dans une direction sensiblement perpendiculaire à une direction principale des oscillations de la masse principale (1).

6. Dispositif résonant selon une des revendications 4 ou 5, **caractérisé en ce que** ledit couplage élastique est réalisé par au moins une lame flexible (201).

7. Dispositif résonant selon la revendication 6, **caractérisé en ce qu'**un premier dispositif complémentaire comporte deux pièces électromagnétiques (204) espacées l'un de l'autre et solidaires de ladite lame flexible (201), et **en ce qu'**un deuxième dispositif complémentaire comporte deux électro-aimants (102) disposés en vis-à-vis des deux pièces électromagnétiques (204).

8. Dispositif résonant selon la revendication 7, **caractérisé en ce que** les deux électro-aimants (102) sont solidaires d'au moins une pièce de liaison (110).

9. Dispositif résonant selon une des revendications précédentes, **caractérisé en ce que** ledit dispositif élastique (115) présente au moins une lame élastique.

**Claims**

1. A resonant device comprising a mass/spring system composed of a main mass comprising at least one main mass element, and of at least one spring element, and comprising at least one additional mass (10) and a coupling device (204) able to couple the additional mass (10) to the main mass (1) and to decouple it therefrom, so as to modify the tuning frequency of the device, **characterized in that** the additional mass comprises at least one additional mass element (102)held in position by an elastic device (115) which exhibits an elastic degree of freedom in a direction substantially parallel to a main direction of the oscillations of the main mass (1).

2. A resonant device as claimed in claim 1, wherein the coupling device comprises at least one electromagnetic assembly comprising two complementary devices of which the first exhibits at least one electromagnetic piece (204) and of which the second exhibits at least one electromagnet (102), one of the two complementary devices being coupled to the main mass (1), and the other complementary device being coupled to one said additional mass (10), the two devices being disposed facing one another, in such a way that, when one said electromagnet (102) is activated, two said complementary devices (102, 204) are mechanically integral, so that the main mass (1) and said additional mass (10) are coupled.

3. The resonant device as claimed in claim 2, wherein at least one electromagnetic piece (204) is coupled to the main mass (1) and in that at least one electromagnet (102) is coupled to said additional mass (10).

4. The resonant device as claimed in claim 3, wherein the coupling between said electromagnetic piece (204) and the main mass (1) is elastic.

5. The resonant device as claimed in claim 4, wherein said coupling exhibits an elastic degree of freedom in a direction substantially perpendicular to a main direction of the oscillations of the main mass (1).

6. The resonant device as claimed in one of claims 4 or 5, wherein said elastic coupling is produced by at least one flexible leaf (201).

7. The resonant device as claimed in claim 6, wherein a first complementary device comprises two electromagnetic pieces (204) spaced apart from one another and integral with said flexible leaf (201), and wherein a second complementary device comprises two electromagnets (102) disposed facing the two electromagnetic pieces (204).

8. The resonant device as claimed in claim 7, wherein the two electromagnets (102) are integral with at least one linking piece (110).

9. The resonant device as claimed in any of the preceding claims, wherein said elastic device (115) exhibits at least one elastic leaf.

**Patentansprüche**

1. Resonanzvorrichtung, umfassend ein Masse-Feder-System, das aus einer Hauptmasse, die wenigstens ein Hauptmassenelement umfasst, und wenigstens einem Federelement besteht, und die wenigstens eine zusätzliche Masse (10) und eine Verbindungsvorrichtung (204) umfasst, die geeignet ist die zusätzliche Masse (10) mit der Hauptmasse (1) zu verbinden und diese zu entkoppeln, um die Abstimmfrequenz der Vorrichtung zu verändern, **dadurch gekennzeichnet, dass** die zusätzliche Masse ein zusätzliches Massenelement enthält (102), das mittels einer elastischen Vorrichtung (115), die einen elastischen Freiheitsgrad im Wesentlichen in einer zur Hauptrichtung der Schwingungen der Hauptmasse parallelen Richtung aufweist, in Position gehalten wird.

2. Resonanzvorrichtung nach Anspruch 1, **dadurch gekennzeichnet, dass** die Verbindungsvorrichtung wenigstens eine elektromagnetische Anordnung umfasst, die zwei komplementäre Vorrichtungen umfasst, von denen die erste wenigstens ein elektromagnetisches Teil (204) und von denen die zweite einen Elektromagneten aufweist, wobei eine der beiden komplementären Vorrichtungen mit der Hauptmasse (1) und die andere mit der zusätzlichen Masse (10) verbunden ist, wobei die beiden Vorrichtungen einander gegenüber auf eine solche Weise angeordnet sind, dass wenn der Elektromagnet (102) aktiviert wird, die beiden komplementären Vorrichtungen (102, 204) mechanisch derart aneinander haften, dass die Hauptmasse (1) und die zusätzlichen Masse (10) verbunden sind.

3. Resonanzvorrichtung nach Anspruch 2, **dadurch gekennzeichnet**, das wenigstens das elektromagnetische Teil (204) mit der Hauptmasse (1) verbunden ist und dass wenigstens der Elektromagnet (102) mit der zusätzlichen Masse (10) verbunden ist.

4. Resonanzvorrichtung nach Anspruch 3, **dadurch gekennzeichnet, dass** die Verbindung zwischen dem elektromagnetischen Teil (204) und der Hauptmasse (1) elastisch ist.

5. Resonanzvorrichtung nach Anspruch 4, **dadurch gekennzeichnet, dass** die Verbindung einen elastischen Freiheitsgrad im Wesentlichen in einer zur Hauptrichtung der Schwingungen der Hauptmasse (1) senkrechten Richtung aufweist.

6. Resonanzvorrichtung nach einem der Ansprüche 4 oder 5, **dadurch gekennzeichnet, dass** die elastische Verbindung durch wenigstens eine flexible Klinge (201) zustande kommt.

7. Resonanzvorrichtung nach Anspruch 6, **dadurch gekennzeichnet, dass** die erste komplementäre Vorrichtung zwei elektromagnetische Teile (204) umfasst, die voneinander getrennt sind und an der flexiblen Klinge (201) anhaften, und das die zweite komplementäre Vorrichtung zwei Elektromagnete (102) umfasst, die den beiden elektromagnetischen Teilen (204) gegenüber angeordnet sind.

8. Resonanzvorrichtung nach Anspruch 7, **dadurch gekennzeichnet, dass** die beiden Elektromagnete (102) an wenigstens einem Verbindungsstück (110) anhaften.

9. Resonanzvorrichtung nach einem der vorigen Ansprüche, **dadurch gekennzeichnet, dass** die elastische Vorrichtung (115) wenigstens eine elastische Klinge aufweist.

FIG.1

FIG.2

FIG.3

FIG.4

FIG.5

FIG.6

$Z_2 = Z_4 - Z_3$

FIG.7